(19) Europäisches Patentamt
European Patent Office
Office européen des brevets

(11) **EP 2 324 933 B1**

(12) **EUROPÄISCHE PATENTSCHRIFT**

(45) Veröffentlichungstag und Bekanntmachung des Hinweises auf die Patenterteilung:
**08.01.2020   Patentblatt 2020/02**

(51) Int Cl.:
**B06B 3/00** *(2006.01)*       **G10K 11/24** *(2006.01)*

(21) Anmeldenummer: **10187092.1**

(22) Anmeldetag: **11.10.2010**

(54) **Koppelelement eines Sensors eines Ultraschall-Durchflussmessgeräts**

Coupling element of a sensor of an ultrasound flow measuring device

Elément de couplage d'un détecteur d'un appareil de mesure de débit à ultrasons

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2009   DE 102009046862**

(43) Veröffentlichungstag der Anmeldung:
**25.05.2011   Patentblatt 2011/21**

(73) Patentinhaber: **Endress+Hauser Flowtec AG
4153 Reinach (CH)**

(72) Erfinder:
• **Berger, Andreas
  79686, Hasel-Glashütten (DE)**
• **Wandeler, Frank
  5236 Remingen (CH)**
• **Wiest, Achim
  79576 Weil am Rhein (DE)**
• **Berger, Andreas
  79686 Hasel-Glashütten (DE)**

(74) Vertreter: **Andres, Angelika Maria et al
Endress+Hauser (Deutschland) AG+Co. KG
PatServe
Colmarer Strasse 6
79576 Weil am Rhein (DE)**

(56) Entgegenhaltungen:
DE-A1- 10 347 079       US-A1- 2007 297 739
US-B1- 6 343 511

EP 2 324 933 B1

**Beschreibung**

Die vorliegende Erfindung betrifft ein Koppelelement eines Sensors eines Ultraschall-Durchflussmessgeräts mit mindestens drei Stäben zur Leitung eines Ultraschallsignals.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Doppler- oder nach dem Laufzeitdifferenz-Prinzip. Beim Laufzeitdifferenz-Prinzip werden die unterschiedlichen Laufzeiten von Ultraschallimpulsen relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Beim Doppler-Prinzip werden Ultraschallwellen mit einer bestimmten Frequenz in die Flüssigkeit eingekoppelt und die von der Flüssigkeit reflektierten Ultraschallwellen ausgewertet. Aus der Frequenzverschiebung zwischen den eingekoppelten und reflektierten Wellen lässt sich ebenfalls die Fließgeschwindigkeit der Flüssigkeit bestimmen. Reflexionen in der Flüssigkeit treten auf, wenn Luftbläschen oder Verunreinigungen in dieser vorhanden sind, so dass dieses Prinzip hauptsächlich bei verunreinigten Flüssigkeiten Verwendung findet.

Die Ultraschallwellen werden mit Hilfe so genannter Ultraschallwandler erzeugt bzw. empfangen. Hierfür sind Ultraschallwandler in der Rohrwandung des betreffenden Rohrleitungsabschnitts fest angebracht. Seit neuerem sind auch Clamp-on-Ultraschall-Durchflussmesssysteme erhältlich. Bei diesen Systemen werden die Ultraschallwandler nur noch mit einem Spannverschluss an die Rohrwandung gepresst. Ein großer Vorteil von Clamp-On-Ultraschall-Durchflussmesssystemen ist, dass sie das Messmedium nicht berühren und auf eine bereits bestehende Rohrleitung angebracht werden. Derartige Systeme sind z. B. aus der EP 686 255 B1, US 4,484, 478 oder US 4,598,593 bekannt.

Ein weiteres Ultraschall-Durchflussmessgerät, das nach dem Laufzeitdifferenz-Prinzip arbeitet, ist aus der US 5,052,230 bekannt. Die Laufzeit wird hier mittels kurzen Ultraschallimpulsen, so genannten Bursts, ermittelt.

Die Ultraschallwandler bestehen normalerweise aus einem elektromechanischen Wandlerelement, z.B. ein piezoelektrisches Element, auch kurz Piezo genannt, und einer Koppelschicht, auch Koppelkeil oder seltener Vorlaufkörper genannt. Die Koppelschicht ist dabei meist aus Kunststoff gefertigt, das piezoelektrische Element besteht in der industriellen Prozessmesstechnik üblicherweise aus einer Piezokeramik. Im piezoelektrischen Element werden die Ultraschallwellen erzeugt und über die Koppelschicht zur Rohrwandung geführt und von dort in die Flüssigkeit geleitet. Da die Schallgeschwindigkeiten in Flüssigkeiten und Kunststoffen unterschiedlich sind, werden die Ultraschallwellen beim Übergang von einem zum anderen Medium gebrochen. Der Brechungswinkel bestimmt sich in erster Näherung nach dem Snell'schen Gesetz. Der Brechungswinkel ist somit abhängig von dem Verhältnis der Ausbreitungsgeschwindigkeiten in den Medien.

Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflektion an Grenzschichten zwischen zwei Materialen.

Denn ein Problem bei der Ultraschall-Durchflussmessung ist, dass die Ultraschallwandler, welche die Ultraschallsignale senden und/oder empfangen, aus anderen Materialen bestehen, als der Messstoff bzw. die ihn umgebende Rohrleitung. Jedes der Materialien hat unterschiedliche akustische und physikalische Eigenschaften (Dichte, Schallgeschwindigkeit, kritische Temperatur, thermische Ausdehnung, Maximale Spannungen, piezoelektrische Effekte,...). Für eine gute thermische Isolation werden vornehmlich metallische Koppelemente, oder Waveguides, eingesetzt. Solche Sensoren weisen relativ gute, nutzbare Bandbreiten auf. Ein Beispiel eines metallischen Koppelelements findet sich in der EP 1 332 339 A2.

Neben einzelnen metallischen Stäben sind auch Bündel von Stäben zur Kopplung von Ultraschallsignalen bekannt geworden, wie z.B. aus der US 5,606,297, US 4,894,806, US 2007/0157404, US 2007/0297739, US 2003/0097879, US 4,783,997, US 4,337,843. Derartig gebaute Sensoren scheinen für Hochtemperaturanwendungen geeignet. Auch andere Materialen finden Verwendung, um Hochtemperaturanwendungen von Ultraschall-Durchflussmessgeräten zu ermöglichen, wie die US 4,948,552 offenbart. Oder andere Formen der Koppelelemente, wie z.B. in der US 6,400,648 gezeigt. Nachteilig bei diesen Lösungen ist weiterhin, dass zusätzliche Anpassungsschichten zur Impedanzanpassung notwendig sind oder ein massiver Signalstärkeverlust oder eine nur kleine nutzbare Bandbreite in kauf genommen wird.

In der US 6,513,391 ist ein Koppelelement offenbart, welches eine Querschnittsverjüngung von der Koppelfläche des piezoelektrischen Elements und der dem Messmedium zugewandten Koppelfläche aufweist. Dies hat thermische Vorteile. Jedoch muss auch hier eine Impedanzanpassung mit einem "Matching Layer" vorgenommen werden.

In der US6343511B1 werden Koppelelemente in verschiedenen Ausführungen gelehrt, wobei die Koppelelemente gebogen sein können und variable Querschnittsflächen aufweisen.

Die Aufgabe der Erfindung besteht darin, einen Sensor eines Ultraschall-Durchflussmessgeräts für Hochtemperaturanwendungen bereit zu stellen.

Die Aufgabe wird gelöst durch Koppelelement eines Sensors eines Ultraschall-Durchflussmessgeräts, welches mindestens drei Stäbe mit jeweils einem ersten Stabende und einem zweiten Stabende umfasst, wobei die Stäbe an ihren jeweils ersten Enden jeweils erste Stirnflächen aufweisen, welche jeweils mit der schallaussendenden und/oder schallempfangenden Fläche eines Ultraschallwandlerelements akustisch koppelbar sind, wobei die jeweils ersten Stirnflächen der Stäbe zusammen eine erste Koppelfläche des Koppelelements bilden, und wobei die Stäbe an ihren jeweils zweiten Enden jeweils zweite Stirnflächen aufweisen, welche eine zweite Koppelfläche des Koppelelements bilden, wobei die Stäbe jeweils einen ersten Stabquerschnitt aufweisen, welcher in Form und/oder Größe von einem jeweils zweiten Stabquerschnitt verschieden ist. Die Stäbe weisen dabei eine vorgegebene Länge zwischen ihren jeweiligen Stirnflächen an ihren jeweiligen Enden auf. Die jeweiligen Stirnflächen stehen also im Wesentlichen senkrecht auf der jeweiligen Stabachse.

Akustisch gekoppelt werden zwei Flächen insbesondere durch direkten Kontakt der Flächen, was hier bedeuten würde, dass die jeweiligen Stirnflächen die schallaussendende und/oder schallempfangende Fläche eines Ultraschallwandlerelements kontaktieren. Dabei ist jedoch zu bedenken, dass auch indirekter Kontakt eine akustische Kopplung darstellen kann. Wenn nun z.B. die Stäbe mit dem Ultraschallwandler verklebt werden, könnte etwas Kleber nicht nur zwischen die einzelnen Stäbe gelangen, sondern auch zwischen die jeweiligen Stirnflächen und die schallaussendende und/oder schallempfangende Fläche eines Ultraschallwandlerelements, dann würde eine indirekte Kontaktierung vorliegen, aber beide Flächen wären akustisch gekoppelt.

Die zweite Koppelfläche ist mit einer ersten Fläche einer Abschlussplatte akustisch koppelbar, wobei die zweite Koppelfläche des Koppelelements m zweite Stirnflächen aufweist, wobei m eine natürliche Zahl größer oder gleich drei ist, wobei das Koppelelement so ausgestaltet ist, dass es eine zu einer ersten gewichteten Impedanz ($Z_{G1}$) der ersten Koppelfläche des Koppelelements um mindestens 25% veränderte zweite gewichtete Impedanz ($Z_{G2}$) aufweist, welche sich errechnet aus der Summe der Produkte aus akustischen Impedanzen ($Z_j$) der Werkstoffe und den Flächeninhalten ($A_j$) der zweiten Stirnflächen, gewichtet mit dem Flächeninhalt ($A_A$) der ersten Fläche der Abschlussplatte:

$$Z_{G2} = \frac{1}{A_A} \sum_{j=1}^{m} Z_j A_j \,,$$ wobei die erste gewichtete Impedanz ($Z_{G1}$) eine Abweichung von weniger als 25% von der akustischen Impedanz ($Z_U$) des Ultraschallwandlers aufweist, wobei sich die erste gewichtete Impedanz ($Z_{G1}$) errechnet aus der Summe der Produkte aus den akustischen Impedanzen ($Z_i$) der Werkstoffe und den Flächeninhalten ($A_i$) der ersten Stirnflächen, gewichtet mit dem Flächeninhalt ($A_U$) der schallaussendenden und/oder schallempfangenden Fläche des Ultraschallwandlerelements: $$Z_{G1} = \frac{1}{A_U} \sum_{i=1}^{n} Z_i A_i \,,$$ mit n einer natürlichen Zahl größer oder gleich drei. Die akustischen Signale sind dabei insbesondere im Koppelelement von der ersten Koppelfläche bis zur zweiten Koppelfläche ohne Werkstoffübergang leitbar. Gemäß einem Ausführungsbeispiel weist die zweite gewichtete Impedanz ($Z_{G2}$) eine Abweichung von weniger als 25% von der akustischen Impedanz ($Z_A$) der Abschlussplatte auf. Abschlussplatte und/oder Ultraschallwandler, insbesondere deren Flächen welche das Koppelelement akustisch koppeln, sind in einer Ausführungsform der Erfindung konvex.

Gemäß einer ersten Weiterbildung der Erfindung sind die die Stäbe aus einem polymeren, metallischen oder keramischen Werkstoff gefertigt. Insbesondere sind die Stäbe aus Stahl, rostfreiem Stahl, PEEK, Aluminiumoxid gefertigt. Sie weisen z.B. konische Form auf, wobei sie z.B. jeweils einen näherungsweise kreisrunden ersten und zweiten Stabquerschnitt aufweisen. Dann weist ein Stab des Koppelelements einen nicht über seine gesamte Länge den gleichen Durchmesser auf. Beim konischen Stab ist der kleinere Durchmesser insbesondere an seinem zweiten Ende zu finden. Der Wert der akustischen Impedanz des Werkstoffs bleibt von der ersten Stirnfläche bis zur zweiten Stirnfläche eines Stabes des Koppelelements über seine gesamte Länge gleich. Es ist kein Werkstoffübergang vorhanden.

Zwischen den Stäben befindet sich in einem Ausführungsbeispiel ein akustisch- und/oder wärmeisolierender Werkstoff, z.B. Luft oder ein anderes Gas oder Flüssigkeit. Jedoch könnten auch andere Werkstoffe, insbesondere im Bereich der Enden der Stäbe eingesetzt werden. Die Stäbe werden z.B. auf die Abschlussplatte und/oder auf den Ultraschallwandler geschweißt, gelötet oder geklebt, wobei dann Kleber zwischen den Stäben angeordnet wäre. Eine von den ersten Stabenden bzw. dem Ultraschallwandler bis zu den zweiten Stabenden bzw. der Abschlussplatte reichende Matrix aus einem Festkörper würde das Koppelelement zu einem Koppelelement, hergestellt aus einem Verbundwerkstoff, machen. Allerdings ist durch die unterschiedlichen Schallgeschwindigkeiten in den unterschiedlichen Werkstoffen ein Vergießen der Stäbe mit einem Material sinnvoll, mit ähnlichen akustischen Eigenschaften oder mit einer schlechten Leitfähigkeit von akustischen Signalen.

Weitere Vorteile der Erfindung sind, neben dem großen nutzbaren Temperaturbereich, ein schnelles Ausschwingverhalten eines Ultraschallsensors mit erfindungsgemäßem Koppelelement, eine gute akustische Anpassung, eine angepasste Einstrahlfläche und radiale Entkopplung von transversalen Wellen.

Eine weitere Weiterbildung des erfindungsgemäßen Koppelelements sieht vor, dass die jeweils erste Stirnfläche von der jeweils zweiten Stirnfläche in Form und/oder Größe verschieden ist. Die jeweiligen Stirnflächen stehen dann im Wesentlichen senkrecht auf der jeweiligen Stabachse und bilden den jeweils letztmöglichen Querschnitt durch den Stab.

Eine weitere Weiterbildung der erfindungsgemäßen Lösung ist darin zu sehen, dass die erste Koppelfläche des Koppelelements, also die Summe aller Stirnflächen der einzelnen Stäbe, mit mindestens 25% der schallaussendenden und/oder schallempfangenden Fläche des Ultraschallwandlerelements akustisch koppelbar ist.

Gemäß einer weiteren Weiterbildung des erfindungsgemäßen Koppelelements sind die Stäbe parallel zueinander angeordnet. Weiterhin ist bei einer weiteren Weiterbildung vorgesehen, dass die Stäbe so ausgestaltet sind, dass der Flächeninhalt des jeweils ersten Stabquerschnitts höchstens 75%, insbesondere höchstens 70%, des Flächeninhalts des zweiten Stabquerschnitts beträgt und/oder dass der Flächeninhalt der jeweils ersten Stirnfläche höchstens 75%, insbesondere höchstens 70%, des Flächeninhalts der jeweils zweiten Stirnfläche beträgt. Wiese ein Stab des Koppelelements unterschiedliche Stabquerschnitte auf, könnte er dennoch näherungsweise gleiche Stirnflächen aufweisen.

In einer weiteren Weiterbildung der Erfindung wird vorgeschlagen, dass die Stäbe jeweils einen Flächeninhalt ihrer jeweils ersten Stirnfläche von höchstens $\pi*(\lambda/10)^2$ aufweisen und/oder einen Flächeninhalt ihrer jeweils zweiten Stirnfläche von höchstens $\pi*(\lambda/12)^2$ aufweisen und/oder dass die Stäbe jeweils eine Länge zwischen ihrer jeweils ersten Stirnfläche an ihrem jeweils ersten Ende und ihrer jeweils zweiten Stirnfläche an ihrem jeweils zweiten Ende von mindestens $4*\lambda$ aufweisen, mit $\lambda$ der Wellenlänge des akustischen Signals in dem bestimmten Material, mit $\lambda=c/f$, mit c der Ausbreitungsgeschwindigkeit des akustischen Signals in dem Material und f der Frequenz des akustischen Signals. Üblicherweise werden akustische Signale in einem Bereich von 10kHz bis 1GHz verwendet, insbesondere im Bereich von 100kHz bis 10MHz. Die Wellenlänge $\lambda$ errechnet sich jeweils entsprechend. Mit Stäben aus einer metallischen Leierung mit einer Schallgeschwindigkeit von ca. 5000 m/s und einem akustischen Signal mit einer Frequenz von ca. 5 MHz ergibt sich die Wellenlänge in den Stäben zu $1*10^{-3}$ m und damit beträgt z.B. die Länge der Stäbe mindestens 4 mm, der Flächeninhalt der ersten Stirnfläche höchstens ungefähr 0,03 mm$^2$ und der Flächeninhalt der zweiten Stirnfläche beträgt somit höchstens ca. 0,02 mm$^2$.

Weist ein Stab des Koppelelements einen näherungsweise kreisrunden Querschnitt über seine gesamte Länge aus, so weist er einen Durchmesser von höchstens $\lambda/5$ seiner ersten Stirnfläche auf und/oder er weist einen Durchmesser seiner zweiten Stirnfläche von höchstens $\lambda/6$ am zweiten Ende auf und/oder der Stab weist eine Länge von mindestens $4*\lambda$ zwischen erster Stirnfläche und zweiter Stirnfläche auf. Insbesondere ist der Stab senkrecht zu der schallaussendenden und/oder schallempfangenden Fläche des Ultraschallwandlerelements mit dem Ultraschallwandlerelement akustisch koppelbar.

Gemäß einer Weiterbildung des erfindungsgemäßen Koppelelements sind mehrere Stäbe, insbesondere über 20 oder insbesondere 50 oder 100 zu einem Bündel zusammengefasst. In einem Ausgestaltungsbeispiel folgen die Anzahl und die Anordnung der Stäbe einer hexagonal oder kubisch dichtesten Packung.

Des weiteren wird die der Erfindung zugrunde liegende Aufgabe gelöst durch einen Sensor eines Ultraschall-Durchflussmessgeräts, welcher ein erfindungsgemäßes Koppelelement aufweist, welches eine schallaussendende und/oder schallempfangende Fläche eines Ultraschallwandlerelements mit seiner ersten Koppelfläche akustisch koppelt.

Eine erste Weiterbildung des erfindungsgemäßen Sensors sieht vor, dass das Koppelement mit seiner zweiten Koppelfläche eine Abschlussplatte akustisch koppelt. Die Dicke der Abschlussplatte ist z.B. abhängig von der Schallgeschwindigkeit des Werkstoffs der Abschlussplatte in welchem sich das akustische Signal ausbreitet und von der Frequenz des akustischen Signals. Die Abschlussplatte weist dabei beispielsweise eine Dicke von höchstens $3*\lambda/2$, insbesondere höchstens $\lambda/2$ auf. Sie ist beispielsweise aus einem metallischen Werkstoff, insbesondere rostfreiem Stahl, Werkzeugstahl oder Titan gefertigt. Ist die Abschlussplatte beispielsweise aus einer metallischen Legierung mit einer Schallgeschwindigkeit von ca. 5000 m/s und die Frequenz des transmittierten akustischen Signals beträgt z.B. 5 MHz, so weist die Abschlussplatte, nach $\lambda=c/f$, eine Dicke von höchstens 1,5 mm auf.

Die Dicke der Abschlussplatte wird dabei senkrecht zur ersten Fläche der Abschlussplatte, mit welcher die Stäbe akustisch gekoppelt sind, insbesondere in Richtung der Signalausbreitung des geleiteten Ultraschallsignals, z.B. parallel zu den Längsachsen der Stäbe, gemessen.

Verwendung findet ein erfindungsgemäßes Koppelelement insbesondere in einem Sensor eines Ultraschall-Durchflussmessgeräts zur Leitung von Ultraschallsignalen zur Durchflussmessung mittels eines Laufzeitdifferenzverfahrens oder eines Dopplerverfahrens.

Erfindungsgemäße Sensoren und erfindungsgemäße Ultraschall-Durchflussmessgeräte werden entsprechend hergestellt.

Die Erfindung wird anhand der nachfolgenden Figuren näher erläutert, in denen jeweils ein Ausführungsbeispiel dargestellt ist. Gleiche Elemente sind in den Figuren mit gleichen Bezugszeichen versehen.

Fig. 1　zeigt dreidimensional ein erfindungsgemäßes Koppelelement aus einem Bündel von einzelnen Stäben,

Fig. 2　zeigt perspektivisch einen Stab mit zwei unterschiedlich Großen Querschnitten.

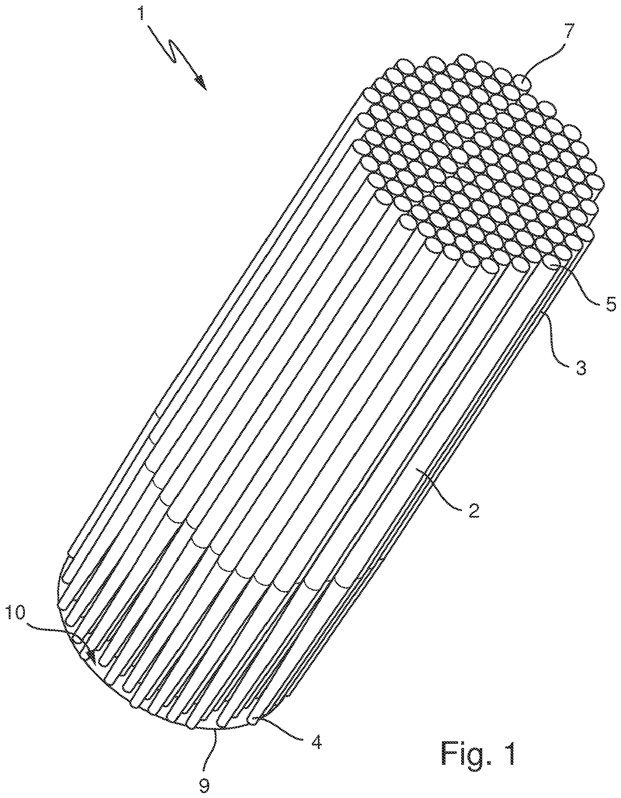

In Fig. 1 ist ein erfindungsgemäßes Koppelelement 1 aus mehreren Stäben 2 dargestellt, welche zu einem Bündel zusammengefasst sind. Beispielsweise um einen Ultraschallwandler, z.B. ein temperaturempfindliches piezoelektrisches Element, welches nur bis zu einer Temperatur von 200°C oder 250°C spezifiziert ist, eines Sensors eines Ultraschall-Durchflussmessgeräts vor zu hohen Temperaturen zu schützen, beispielsweise weil der Sensor in ein heißes Messmedium eingesetzt ist, von welchem der Durchfluss zu bestimmen ist, werden erfindungsgemäße Koppelelemente 1 verwendet.

Die Stäbe 2 des Bündels sind in diesem Ausführungsbeispiel parallel zueinander. Ihre Längsachsen stehen senkrecht auf einer aus den ersten Stirnflächen 5 der einzelnen Stäbe 2 gebildeten ersten Koppelfläche 7 des Koppelelements 1. Auch die zweite Koppelfläche des Koppelelements 1, welche aus den zweiten Stirnflächen der Stäbe 2 gebildet wird, steht senkrecht auf den Längsachsen der einzelnen Stäbe 2. Die Stäbe 2 sind relativ homogen gebündelt, d.h. dass die Stirnflächen 5 und 6 der Stäbe 2, welche die erste Fläche 10 der Abschlussplatte 9 und die schallaussendende und/oder schallempfangende Fläche des Ultraschallwandlerelements kontaktieren, relativ homogen auf diesen jeweiligen Flächen verteilt sind.

Die erste und die zweite Koppelfläche 7 und 8 des Koppelelements 1 bilden die letztmöglichen Querschnitte durch das Koppelelement 1. Sowohl die erste Fläche 10 der Abschlussplatte 9 als auch die hier nicht dargestellte schallaussendende und/oder schallempfangende Fläche des Ultraschallwandlers sind konvex. Die Abstände der einzelnen Stäbe 2 zu den Rändern der jeweiligen ersten Fläche 10 der Abschlussplatte 9 bzw. der schallaussendenden und/oder schallempfangenden Fläche des Ultraschallwandlers sind klein und in der Größenordnung der Abstände der Stäbe 2 zueinander.

Die erste Koppelfläche 7 des Koppelelements 1 kontaktiert hier mindestens 25% der der schallaussendenden und/oder schallempfangenden Fläche des Ultraschallwandlerelements. Die zweite Koppelfläche 8 kontaktiert, wie gezeigt die erste Fläche 10 der Abschlussplatte 9. In diesem Beispiel sind 110 Stäbe mit einem Durchmesser der ersten Stirnfläche 5 von 0,6mm und einem Durchmesser der zweiten Stirnfläche 6 von 0,34mm zu einem Koppelelement 1 gebündelt; m=n=110. Daraus ergeben sich Flächeninhalte der Stirnflächen von $A_i$=0,283mm$^2$ und $A_j$=0,091 mm$^2$. Die Stäbe sind aus einem Stahl gefertigt. Dieser Stahl hat eine akustische Impedanz von $A_i$=$A_j$=46MRayl. Der Ultraschallwandler ist aus einer Piezokeramik mit einer akustischen Impedanz von ca. 30MRayl. Zum Vergleich: Aluminium weist eine Impedanz von ca. 17-18MRayl auf.

Sowohl der Ultraschallwandler als auch die Abschlussplatte 9 sind näherungsweise kreisrund und weisen einen Flächeninhalt von jeweils 50,265 mm$^2$ auf.

Die gewichteten Impedanzen errechnen sich wie folgt:

$Z_{G1}$=(110*46,2MRayl*0,283 mm$^2$)/50,265 mm$^2$=28,6MRayl und

$Z_{G2}$=(110*46,2MRayl*0,091 mm$^2$)/50,265 mm$^2$= 9,2MRayl.

Es ist offensichtlich, dass der Unterschied zwischen beiden gewichteten Impedanzen größer als 25% der ersten gewichteten Impedanz ist.

Als Grundlage zu dieser Berechnung ist "Millner: Wissenspeicher Ultraschalltechnik, VEB 1987, Kapitel 1.3.5" heranzuziehen.

Hier wird gezeigt, dass $J = \frac{1}{2} Z_0 \omega^2 \xi_0^2$, mit

$Z_0$ der akustischen Impedanz, $\omega$ der Kreisfrequenz, $\xi$ der Auslenkung und der Schallintensität J, welche als mittlere Schallenergie, die je Zeiteinheit durch eine Fläche strömt, definiert ist. Bei konstanter Schallintensität gilt folglich: $J = \frac{1}{2} Z_1 \omega^2 \xi_1^2 = \frac{1}{2} Z_2 \omega^2 \xi_2^2$ woraus folgt

$Z_1 \xi_1^2 = Z_2 \xi_2^2$ bei gleicher Kreisfrequenz und schlussendlich gilt: $\frac{\xi_1}{\xi_2} = \sqrt{\frac{Z_2}{Z_1}}$. Somit ist das ideale Transformationsverhältnis für diese "Anpassungsschichten" durch das Impedanzverhältnis bestimmt. Akustische Transformatoren sind auf im Leistungsultraschall, beim Ultraschallschweissen, in der Anwendung. Das Transformationsverhältnis Amplituden wird grob ausserhalb der Resonanzen durch die Flächen A bestimmt:

$\frac{\xi_1}{\xi_2} = \frac{A_2}{A_1}$.

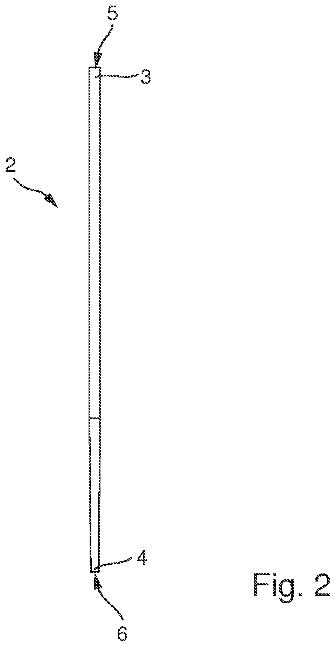

In Fig. 2 ist ein einzelner Stab 2 eines erfindungsgemäßen Koppelelements gezeichnet. Der Stab 2 weist ein erstes Ende 3 und ein zweites Ende 4 auf. Am ersten Ende 3 weist der Stab 2 eine erste Stirnfläche 5 und am zweiten Ende 4 eine zweite Stirnfläche 6 auf. Im Verbund mit zumindest zwei weiteren Stäben bilden die Stirnflächen 4, 5 die Koppelflächen des Koppelelements. Die erste Stirnfläche 5 wird mit einem Ultraschallwandler, insbesondere mit dessen schallaussendender und/oder schallempfangender Fläche akustisch gekoppelt; sie kontaktiert diese beispielsweise.

Der Stab 2 weist am ersten Ende 3 einen näherungsweise kreisrunden Querschnitt auf. Auch an seinem zweiten Ende 4 weist der Stab 2 einen im Wesentlichen kreisrunden Querschnitt auf. Jedoch ist die Größe der beiden Querschnittsflächen unterschiedlich. Der Flächeninhalt der ersten Stirnfläche 5 ist größer als der Flächeninhalt der zweiten Stirnfläche 6 des Stabes 2, welche hier stellvertretend für zwei Stabquerschnitte veranschaulicht wurden. Der Stab 2 nimmt nahe seinem zweiten Ende 4 konische Form an.

Der skizzierte Stab 2 ist in diesem Ausführungsbeispiel aus einem Edelstahl hergestellt. Jedoch könne auch andere Werkstoffe wie beispielsweise Titan, Aluminium, Al2O3 Verwendung finden. Die Auswahl des Werkstoffs ist eng verknüpft mit den weiteren Dimensionen des Koppelelements, Anzahl der Stäbe, deren Längen und/oder deren Querschnittsflächen, insbesondere deren Stirnflächen, und dem Ultraschallsignal.

Beispielsweise weisen die Stäbe Längen von mindestens 30 mm, bei Durchmesserverhältnissen von minimalem zu maximalem Durchmesser ab 1,3 auf. Hier beträgt der Flächeninhalt der ersten Stirnfläche 3 ca. 0,091 mm$^2$ und der Flächeninhalt der zweiten Stirnfläche 6 beträgt ungefähr 0,283 mm$^2$. Somit beträgt der Flächeninhalt der ersten Stirnfläche 3 rund 32 % des Flächeninhalts der zweiten Stirnfläche 6. Auch diese geometrischen Abmessungen sind abhängig vom Werkstoff und insbesondere von der Wellenlänge des Ultraschallsignals, welches durch das Koppelelement geleitet werden soll. Sind die Stabquerschnitte, insbesondere deren Durchmesser, geschickt gewählt, lassen sich Longitudinalwellen gut übertragen und Transversalwellen gleichzeitig stark dämpfen. Dieser Effekt hängt direkt vom Verhältnis der Wellenlänge zum Stabdurchmesser ab. So treten bei relativ dünnen Stäben keine zusätzlichen Radialmoden auf. Das Koppelelement zeichnet sich durch ein schnelles Ausschwingverhalten aus. Dies ist auch durch die bei Metallen ähnliche akustische Impedanz im Vergleich zu den meist verwendeten Ultraschallelementen, den piezoelektrischen Keramiken, leicht zu erklären. Hier, wie in der Elektrotechnik, finden nur geringe nur geringe Reflektionen zwischen den beiden aneinander grenzenden Werkstoffen des Ultraschallwandlers und des Koppelelements statt.

## Bezugszeichenliste

1    Koppelelement
2    Stab
3    Erstes Stabende
4    Zweites Stabende
5    Erste Stirnfläche
6    Zweite Stirnfläche
7    Erste Koppelfläche des Koppelelements
8    Zweite Koppelfläche des Koppelelements
9    Abschlussplatte
10   Erste Fläche der Abschlussplatte

## Patentansprüche

1. Koppelelement (1) eines Sensors eines Ultraschall-Durchflussmessgeräts, welches mindestens drei Stäbe (2) mit jeweils einem ersten Stabende (3) und einem zweiten Stabende (4) umfasst, wobei die Stäbe (2) an ihren jeweils ersten Enden (3) jeweils erste Stirnflächen (5) aufweisen, welche jeweils mit der schallaussendenden und/oder schallempfangenden Fläche eines Ultraschallwandlerelements akustisch koppelbar sind, wobei die jeweils ersten Stirnflächen (3) der Stäbe zusammen eine erste Koppelfläche (7) des Koppelelements (1) bilden, und wobei die Stäbe (2) an ihren jeweils zweiten Enden (4) jeweils zweite Stirnflächen (6) aufweisen, welche eine zweite Koppelfläche (8) des Koppelelements (1) bilden,

wobei die Stäbe (2) jeweils einen ersten Stabquerschnitt aufweisen, welcher in Form und/oder Größe von einem jeweils zweiten Stabquerschnitt verschieden ist,

**dadurch gekennzeichnet,**

**dass** die zweite Koppelfläche (8) mit einer ersten Fläche (10) einer Abschlussplatte (9) akustisch koppelbar ist, wobei die zweite Koppelfläche (8) des Koppelelements (1) m zweite Stirnflächen (4) aufweist, wobei m eine natürliche Zahl größer oder gleich drei ist, und dass das Koppelelement (1) so ausgestaltet ist, dass es eine zu einer ersten gewichteten Impedanz ($Z_{G1}$) der ersten Koppelfläche (7) des Koppelelements (1) um mindestens 25% veränderte zweite gewichtete Impedanz ($Z_{G2}$) aufweist, welche sich errechnet aus der Summe der Produkte aus akustischen Impedanzen ($Z_j$) der Werkstoffe und den Flächeninhalten ($A_j$) der zweiten Stirnflächen (6), gewichtet mit dem Flächeninhalt ($A_A$) der ersten Fläche (10) der Abschlussplatte (9):

$$Z_{G2} = \frac{1}{A_A} \sum_{j=1}^{m} Z_j A_j \,,$$ wobei die erste gewichtete Impedanz ($Z_{G1}$) eine Abweichung von weniger als 25% von der akustischen Impedanz ($Z_U$) des Ultraschallwandlers aufweist, wobei sich die erste gewichtete Impedanz ($Z_{G1}$) errechnet aus der Summe der Produkte aus den akustischen Impedanzen ($Z_i$) der Werkstoffe und den Flächeninhalten ($A_i$) der ersten Stirnflächen (5), gewichtet mit dem Flächeninhalt ($A_U$) der schallaussendenden und/oder schallempfangenden Fläche des Ultraschallwandlerelements:

$$Z_{G1} = \frac{1}{A_U} \sum_{i=1}^{n} Z_i A_i \,,$$ mit n einer natürlichen Zahl größer oder gleich drei.

2. Koppelelement (1) eines Sensors eines Ultraschall-Durchflussmessgeräts nach Anspruch 1,
**dadurch gekennzeichnet,**
**dass** die jeweils erste Stirnfläche von der jeweils zweiten Stirnfläche in Form und/oder Größe verschieden ist

3. Koppelelement (1) eines Sensors eines Ultraschall-Durchflussmessgeräts nach Anspruch 1 oder 2,
**dadurch gekennzeichnet,**
**dass** die erste Koppelfläche (7) des Koppelelements (1) mit mindestens 25% der schallaussendenden und/oder schallempfangenden Fläche des Ultraschallwandlerelements akustisch koppelbar ist.

4. Koppelelement (1) eines Sensors eines Ultraschall-Durchflussmessgeräts nach einem der Ansprüche 1 bis 3,
**dadurch gekennzeichnet,**
**dass** die Stäbe (2) parallel zueinander angeordnet sind.

5. Koppelelement (1) eines Sensors eines Ultraschall-Durchflussmessgeräts nach einem der Ansprüche 1 bis 4 ,
**dadurch gekennzeichnet,**
**dass** die Stäbe (2) so ausgestaltet sind, dass der Flächeninhalt des jeweils ersten Stabquerschnitts höchstens 75 % des Flächeninhalts des zweiten Stabquerschnitts beträgt.

6. Koppelelement (1) eines Sensors eines Ultraschall-Durchflussmessgeräts nach einem der Ansprüche 1 bis 5,
**dadurch gekennzeichnet,**
**dass** die Stäbe (2) konisch sind.

7. Koppelelement (1) eines Sensors eines Ultraschall-Durchflussmessgeräts nach einem der Ansprüche 1 bis 6,
**dadurch gekennzeichnet,**
**dass** die Stäbe (2) jeweils einen näherungsweise kreisrunden ersten und zweiten Stabquerschnitt aufweisen.

8. Koppelelement (1) eines Sensors eines Ultraschall-Durchflussmessgeräts nach einem der Ansprüche 1 bis 7,
**dadurch gekennzeichnet,**
**dass** mehrere Stäbe (2) zu einem Bündel zusammengefasst sind.

9. Sensor eines Ultraschall-Durchflussmessgeräts,
**dadurch gekennzeichnet,**
**dass** er ein Koppelelement (1) nach einem der Ansprüche 1 bis 8 aufweist, welches eine schallaussendende und/oder schallempfangende Fläche eines Ultraschallwandlerelements mit seiner ersten Koppelfläche (7) akustisch koppelt.

10. Sensor eines Ultraschall-Durchflussmessgeräts nach Anspruch 9,
**dadurch gekennzeichnet,**
**dass** das Koppelement (1) mit seiner zweiten Koppelfläche (8) eine Abschlussplatte (9) akustisch koppelt.

**Claims**

1. Coupling element (1) of a sensor of an ultrasonic flowmeter, said element comprising at least three rods (2) each with a first rod end (3) and a second rod end (4), wherein, at their first ends (3), the rods feature first front surfaces (5), which can each be acoustically coupled with the sound-emitting and/or sound-receiving surface of an ultrasonic converter element, wherein the first front surfaces (3) of the rods together form a first coupling surface (7) of the coupling element (1), and wherein, at their second ends (4), the rods (2) each have second front surfaces (6), which form a second coupling surface (8) of the coupling element (1),
wherein the rods (2) each have a first rod cross-section, which is different from a second rod cross-section in terms of shape and/or size,
**characterized in that**
the second coupling surface (8) can be acoustically coupled with a first surface (10) of an end plate (9), wherein the second coupling surface (8) of the coupling element (1) has m second front surfaces (4), m being a natural number greater than or equal to three, and **in that** the coupling element (1) is designed in such a way that it has a second weighted impedance ($Z_{G2}$) which is modified by at least 25 % in relation to a first weighted impedance ($Z_{G1}$) of the first coupling surface (7) of the coupling element (1), wherein said second impedance is calculated from the sum of the products of the acoustic impedances ($Z_j$) of the materials and the surface areas ($A_j$) of the second front surfaces (6), weighted with a surface area ($A_A$) of the first surface (10) of the end plate

(9): $Z_{G2} = \dfrac{1}{A_A} \sum_{j=1}^{m} Z_j A_j$ wherein the first weighted impedance ($Z_{G1}$) displays a deviation of less than 25 % of the acoustic impedance (Zu) of the ultrasonic converter, wherein the first weighted impedance ($Z_{G1}$) is calculated from the sum of the products of the acoustic impedances ($Z_i$) of the materials and the surface areas ($A_i$) of the first front surfaces (5), weighted with the surface area (Au) of the sound-emitting and/or
sound-receiving surface of the ultrasonic converter

element: $Z_{G1} = \dfrac{1}{A_U}\sum_{i=1}^{n} Z_i A_i$ , where n is a natural number greater than or equal to three.

2. Coupling element (1) of a sensor of an ultrasonic flowmeter as claimed in Claim 1,
**characterized in that**
the first front surface is different from the second front surface in terms of shape and/or size.

3. Coupling element (1) of a sensor of an ultrasonic flowmeter as claimed in Claim 1 or 2,
**characterized in that**
the first coupling surface (7) of the coupling element (1) can be acoustically coupled with at least 25 % of the sound-emitting and/or sound-receiving surface of the ultrasonic converter element.

4. Coupling element (1) of a sensor of an ultrasonic flowmeter as claimed in one of the Claims 1 to 3,
**characterized in that**
the rods (2) are arranged parallel to one another.

5. Coupling element (1) of a sensor of an ultrasonic flowmeter as claimed in one of the Claims 1 to 4,
**characterized in that**
the rods (5) are designed in such a way that the surface area of the first rod cross-section is at maximum 75 % of the surface area of the second rod cross-section.

6. Coupling element (1) of a sensor of an ultrasonic flowmeter as claimed in one of the Claims 1 to 5,
**characterized in that**
the rods (2) are conical.

7. Coupling element (1) of a sensor of an ultrasonic flowmeter as claimed in one of the Claims 1 to 6,
**characterized in that**
the rods (2) each have an approximately circular first and second rod cross-section.

8. Coupling element (1) of a sensor of an ultrasonic flowmeter as claimed in one of the Claims 1 to 7,
**characterized in that**
multiple rods (2) are grouped into a bundle.

9. Sensor of an ultrasonic flowmeter,
**characterized in that**
it has a coupling element (1) as claimed in one of the Claims 1 to 8, which acoustically couples a sound-emitting and/or sound-receiving surface of an ultrasonic converter element with its first coupling surface (7).

10. Sensor of an ultrasonic flowmeter as claimed in Claim 9,
**characterized in that**
the coupling element (1) acoustically couples an end plate with its second coupling surface (8).

## Revendications

1. Élément de couplage (1) d'un capteur d'un débitmètre à ultrasons, lequel élément comprend au moins trois tiges (2) avec chacune une première extrémité de tige (3) et une deuxième extrémité de tige (4), les tiges (2) présentant à leurs premières extrémités (3) respectives de premières surfaces frontales (5), lesquelles peuvent être couplées de manière acoustique avec la surface émettant le son et/ou recevant le son d'un élément convertisseur à ultrasons, les premières surfaces frontales (3) respectives des tiges formant une première surface de couplage (7) de l'élément de couplage (1), et les tiges (2) présentant en leurs deuxièmes extrémités (4) respectives des deuxièmes surfaces frontales (6), lesquelles forment une deuxième surface de couplage (8) de l'élément de couplage (1),
pour lequel les tiges (2) présentent chacune une première section de tige, laquelle est différente en termes de forme et de taille de la deuxième section de tige,
**caractérisé**
**en ce que** la deuxième surface de couplage (8) peut être couplée de manière acoustique avec la première surface (10) d'une plaque de fermeture, la deuxième surface de couplage (8) de l'élément de couplage (1) présentant m deuxièmes surfaces frontales (4), m étant un nombre naturel supérieur ou égal à trois, et en ce que l'élément de couplage (1) est conçu de telle sorte qu'il présente une deuxième impédance pondérée ($Z_{G2}$) qui est modifiée d'au moins 25 % par rapport à une première impédance pondérée ($Z_{G1}$) de la première surface de couplage (7) de l'élément de couplage (1), laquelle deuxième impédance est calculée à partir de la somme des produits des impédances acoustiques ($Z_j$) des matériaux et des aires ($A_j$) des deuxièmes surfaces frontales (6), pondérées avec l'aire ($A_A$) de la première surface (10) de la plaque de fermeture (9) :

$$Z_{G2} = \dfrac{1}{A_A}\sum_{j=1}^{m} Z_j A_j$$ , la première impédance pondérée ($Z_{G1}$) présentant un écart de moins de 25 % de l'impédance acoustique (Zu) du convertisseur à ultrasons, la première impédance pondérée ($Z_{G1}$) se calculant à partir de la somme des produits des impédances acoustiques ($Z_i$) des matériaux et des aires ($A_i$) des premières surfaces frontales (5), pondérées avec l'aire (Au) de la surface - émettant le son et/ou recevant le son - de l'élément de convertisseur à ultrasons : $Z_{G1} = \dfrac{1}{A_U} \sum_{i=1}^{n} Z_i A_i$, où n est un nombre naturel supérieur ou égal à trois.

2. Élément de couplage (1) d'un capteur d'un débitmètre à ultrasons selon la revendication 1, **caractérisé en ce que** la première surface frontale est différente en termes de forme et/ou de taille de la deuxième surface frontale.

3. Élément de couplage (1) d'un capteur d'un débitmètre à ultrasons selon la revendication 1 ou 2, **caractérisé en ce que** la première surface de couplage (7) de l'élément de couplage (1) peut être couplée de manière acoustique avec au moins 25 % de la surface - émettant le son et/ou recevant le son - de l'élément convertisseur à ultrasons.

4. Élément de couplage (1) d'un capteur d'un débitmètre à ultrasons selon l'une des revendications 1 à 3, **caractérisé en ce que** les tiges (2) sont disposées parallèlement les unes aux autres.

5. Élément de couplage (1) d'un capteur d'un débitmètre à ultrasons selon l'une des revendications 1 à 4, **caractérisé en ce que** les tiges (5) sont conçues de telle sorte que l'aire de la première section de tige représente au maximum 75 % de l'aire de la deuxième section de tige.

6. Élément de couplage (1) d'un capteur d'un débitmètre à ultrasons selon l'une des revendications 1 à 5, **caractérisé en ce que** les tiges (2) sont coniques.

7. Élément de couplage (1) d'un capteur d'un débitmètre à ultrasons selon l'une des revendications 1 à 6, **caractérisé en ce que** les tiges (2) présentent chacune une première et une deuxième section de tige approximativement circulaire.

8. Élément de couplage (1) d'un capteur d'un débitmètre à ultrasons selon l'une des revendications 1 à 7, **caractérisé en ce que** plusieurs tiges (2) sont regroupées en un faisceau.

9. Capteur d'un débitmètre à ultrasons, **caractérisé en ce qu'**il comporte un élément de couplage (1) selon l'une des revendications 1 à 8, lequel couple de manière acoustique avec sa première surface de couplage (7) une surface émettant le son et/ou recevant le son d'un élément de convertisseur à ultrasons.

10. Capteur d'un débitmètre à ultrasons selon la revendication 9, **caractérisé en ce que** l'élément de couplage (1) couple de manière acoustique avec sa deuxième surface de couplage (8) une plaque de fermeture.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 686255 B1
- US 4484 A
- US 478 A
- US 4598593 A
- US 5052230 A
- EP 1332339 A2
- US 5606297 A
- US 4894806 A
- US 20070157404 A
- US 20070297739 A
- US 20030097879 A
- US 4783997 A
- US 4337843 A
- US 4948552 A
- US 6400648 B
- US 6513391 B
- US 6343511 B1